# EUROPEAN PATENT SPECIFICATION

(11) **EP 4 171 206 B1**
(45) Date of publication and mention of the grant of the patent: **21.01.2026**
(21) Application number: 21737825.6
(22) Date of filing: 23.06.2021
(51) Int. Cl.: A01J 7/02, A01J 9/00

(54) **MILK STORAGE TANK**
MILCHVORRATSBEHÄLTER
RÉSERVOIR DE STOCKAGE DE LAIT

(30) Priority: 25.06.2020 SE 2050761
(43) Date of publication of application: 03.05.2023
(73) Proprietor: DeLaval Holding AB, 147 21 Tumba (SE)
(72) Inventor: BOSEK, Lukasz, 147 21 Tumba (SE); FRANKOWSKI, Janusz, 147 21 Tumba (SE); HEBELS, Peter, 147 21 Tumba (SE); HUPALO, Malgorzata, 147 21 Tumba (SE); LEEUWERIK, Martin, 147 21 Tumba (SE); STENCEL, Krystian, 147 21 Tumba (SE); TREBICKI, Mariusz, 147 21 Tumba (SE); TRZNADEL, Jaroslaw, 147 21 Tumba (SE); WYSOCKI, Piotr, 147 21 Tumba (SE)
(74) Representative: DeLaval International AB
(86) International application number: PCT/SE2021/050622
(87) International publication number: WO 2021/262075

(56) References cited:
- US-A- 2 275 705
- US-A- 2 873 723

## Description

### TECHNICAL FIELD

The present invention relates to a milk storage tank for storing milk at an animal milking site. The invention further relates to such a milk storage tank adapted so that bacteria growth may be reduced.

### BACKGROUND

At animal milking sites, using automatic milking systems (AMS), conventional milking systems (CMS), or a combination, milk has to be stored over a certain period of time before milk is collected and transported to a dairy. Cooling of the milk is necessary in order for the milk quality not to deteriorate. In a milk storage tank at an animal milking site, milk is stored at approximately 4 degrees Celsius.

At animal milking sites where at least one automatic milking system is used for the fully automated milking of milking animals, milk continuously flows, or intermittently flows with comparatively short time intervals between milking sessions, into a milk storage tank, where the milk is cooled to a suitable temperature for storage. This means that warm milk from the automatic milking system is continuously or intermittently added to the milk storage tank, at least for certain periods of the day. The continuous addition of warm milk entails that at an inlet of the milk storage tank it may be difficult to maintain a low temperature. One specific problem is that in the interface between the milk conduit and the milk inlet opening, outside the milk storage tank, milk may be left uncooled. In milk storage tanks where the period between milk collections is in the range of 24 - 72 hours, this may create serious problems with bacteria growth.

To avoid or at least reduce bacteria growth, a so-called instant cooler, a heat exchanger such as a plate heat exchanger, for cooling milk with cold tap water may be arranged in the milk conduit leading from the milking system to the milk storage tank. The milk arriving at the inlet of the milk storage tank is thus already cooled to a lesser or greater extent.

In one example of related art, document WO 2015/053692 A1, a milk storage or cooling tank with a milk passage opening enabling passing of milk into and out of the milk storage space is disclosed. The milk passage opening includes a pipe connector having both a milk inlet and a milk outlet. In WO 2015/053692 A1, the problem with bacteria growth is solved or at least alleviated by providing a solution for additional cooling of the milk to be admitted into the milk storage space of the milk cooling tank. The pipe connector is hereby for instance provided with an additional heat exchanger for the cooling of milk in the pipe connector. Document US 2 873 723 A is another example of related art, in which a vacuum bulk milk tank with agitators is disclosed. However, there exists a need for an improved milk storage tank where bacteria growth may be reduced in an alternative manner that does not require such additional cooling solutions. Moreover, there is a need for an improved milk storage tank that exhibits both a simpler and more flexible construction, while safeguarding the quality of the milk in the milk storage tank.

### SUMMARY

The object of the present invention is to eliminate or at least to minimize the problems discussed above. This is achieved by a milk storage tank according to the appended independent claim. Advantageous embodiments are presented in the appended dependent claims.

According to the invention there is provided a milk storage tank according to claim

If the same pipe connector or opening is used as both milk inlet and outlet, as in the prior art solution of WO 2015/053692 A1, and the pipe connector or opening is large there is a problem with "milk FIFO" (first in first out). The pipe connector or opening typically needs to be relatively large in its diameter, e.g. larger than 75 mm, for example 100 mm, to ensure fast emptying of the milk storage space into a collecting dairy truck, as required by the dairies. The problem with milk FIFO in this case means that it cannot be ensured that the new in-coming milk will push all the waiting milk in the pipe connector, whereby some milk may remain, possibly for a long time, in the pipe connector, the milk inlet opening or any components between the pipe connector and the milk inlet opening due to the lack of turbulence. This is particularly a problem on animal milking sites using AMS solutions, but may also apply to animal milking sites using CMS solutions, or an animal milking site using a combination of the two.

The milk storage tank having milk inlet openings separate from the milk outlet opening solves or at least significantly alleviates the problem by ensuring improved milk flow into the milk storage space and thereby reduced bacteria growth and improved milk quality, as it reduces the risk that remaining milk is left (uncooled and non-agitated) outside the milk storage tank.

Also, by separating the milk inlet openings from the milk outlet openings, the dimensions of each milk inlet openings can be configured to be different (suitably smaller) than the dimension of the milk outlet opening. Enabling dedicated dimensions, or diameters, of the milk inlet openings in this manner further contributes to enabling improved milk flow into the milk storage space, and hence reduced bacteria growth and improved milk quality.

By minimizing the components needed in this interface, e.g. eliminating the need for a pipe connector/adapter between the single milk inlet opening of a conventional milk storage tank and two or more milk conduits, the milk quality can be further ensured, because there is a smaller volume between the milk conduit and the milk inlet opening where remaining milk may be left uncooled/non-agitated and bacteria growth may occur.

Also, since the milk storage tank comprises, for each of the at least two milk inlet openings, a respective valve configured to close or open the respective milk opening, each of the at least two milk inlet openings can be completely closed while milk is still present inside the milk storage space of the milk storage tank. By enabling the closing of a milk inlet opening, service (e.g. reparation, replacement of components, cleaning operations etc.) may be performed on the components located outside the milk storage tank without first having to empty the milk storage tank. This greatly increases the flexibility for e.g. a farmer on an animal milking site who does no longer need to wait for a milk pickup to perform this service, but is instead enabled to do so at any suitable time and on a moment's notice. Also, as anyone in the business recognizes, the last thing that a farmer wants to do is to drain the milk from the milk storage tank because this means a loss of income that cannot be replaced. Therefore, in the event that an emergency service needs to be performed, e.g. a crucial repair or component replacement, cleaning due to contamination, or other, the closable valves will save the farmer money, especially if there is a significant amount of milk in the milk storage tank. Furthermore, by enabling closing of the valve(s), an ongoing problem, such as e.g. a malfunction of some sort or contaminants in a milk inlet conduit that risk entering the milk storage tank, the operation can be immediately stopped so that the damage is minimized. Thereafter, the farmer can in applicable cases fix the problem himself/herself, or await a service person, without having to worry about deteriorating the quality of the milk that has already entered the milk storage tank. Furthermore, the at least two inlet openings provided with respective valves enhances the flexibility by enabling independent inlet openings for several (different) milking systems (AMS and CMS). Hence, several (different) milking systems are independently connectable to the milk storage tank.

Suitably, the at least two milk inlet openings adapted to receive and be connected to a respective milk conduit need not be identical, thereby enabling mixing dimensions of the incoming milk conduits. In some embodiments, a first of the at least two milk inlet openings may be adapted to receive and be connected to a milk conduit having a first diameter and a second of the at least two milk inlet openings may be adapted to receive and be connected to a milk conduit having a second diameter, different from the first diameter. In a non-limiting example, the first diameter may be selected such that the first of the at least two milk inlet openings may be adapted to receive and be connected to a standard AMS milk conduit and the second of the at least two milk inlet openings may be adapted to receive and be connected to a standard CMS milk conduit, thereby enabling direct connection of different milking systems on a hybrid animal milking site into one milk storage tank. In one non-limiting example the first diameter may be 1,5"/38 mm and the second diameter may be 2"/50 mm. The milk inlet openings may in some embodiments comprise standardized connections with threads for connection to several AMS and/or CMS milking systems. By using different dimensions for at least two milk inlet openings, the further advantage of enabling mixing of dimensions of the incoming milk conduits without the need of additional adapter components between the milk conduits and the milk inlet openings is also achieved. This further contributes to the advantage of reducing the volume between the milk conduit and the milk inlet opening where milk may be left uncooled and non-agitated, hence reducing the risk of bacteria growth and further ensuring the milk quality.

Yet a further advantage is that since the milk storage tank comprises at least two inlet openings with a respective valve, the farmer can close one milk inlet opening, for service or other reason, and continue operation using the at least one other milk inlet opening. For a small-sized animal milking site it may be enough to have a milk storage tank with a single milk inlet opening. Nevertheless, a farmer on such a site may choose to invest in a milk tank as described herein to obtain the advantages of being able to switch from one milk inlet opening to the other if needed for service reasons, or to have the possibility to scale up and connect additional milking systems in the future. The investment in a milk storage tank is a long-time investment and the farmer may be planning 20-30 years ahead when making these considerations. Therefore, the added flexibility of the milk storage tank presented herein is highly advantageous.

According to the invention, the milk storage tank further comprises, for each of the at least two milk inlet openings, a respective connector comprising a hollow main body and a connection pipe. The respective connector being adapted to be connected to the respective milk inlet opening at a respective first end of the hollow main body, to the respective milk conduit at a respective second end of the hollow main body, and to a respective cleaning conduit branch in fluid communication with the respective connection pipe. The respective cleaning conduit branch is adapted to enable passing of cleaning liquid into the respective connector from a cleaning system.

Suitably, the connector thereby enables cleaning of the components that connect a milk conduit and a milk inlet opening, i.e. the respective valve and the connector itself. By the connector being a dedicated connector connecting to a single milk conduit, compared to prior art solutions having pipe connectors that connect more than one milk conduit to a milk inlet and outlet opening, the present connector can be made shorter and more compact. The compact design of the connector according to embodiments herein is further enabled by the milk inlet openings being separate from the milk outlet opening, because the diameter of each milk inlet opening can thereby suitably be made smaller than that of the milk outlet. This further contributes to achieving a smaller volume between the milk conduit and the milk inlet opening where remaining milk may be left uncooled and non-agitated, so that the advantages that the risk of bacteria growth is further reduced and milk quality is ensured.

In some embodiments, each of the at least two milk inlet openings may pass through a side wall of the tank housing at a height of 50 cm or less from the bottom of the milk storage space. Preferably the height is 30 cm or less, most preferably between 10 cm and 30 cm, from the bottom of the milk storage space. Advantageously, this makes the milk inlets easily accessible to an operator. The side wall of the tank is hereby considered as a side wall on either a vertical tank or a horizontal tank, wherein the side wall is preferably a front or back side wall on the horizontal tank. The low placement on the side wall of the milk storage tank further reduces the risk of incoming milk falling into the milk storage tank from a large height, especially if the milk storage tank is empty or comprises a low level of milk. Thereby, the milk is handled gently and the risk of free fatty acids forming, which deteriorate the quality and flavour of the milk, is reduced.

In some embodiments, the respective valves are configured to be manually operated. This optional embodiment further increases the flexibility and serviceability since it removes the need for any special tool to be applied in closing and opening operations. Thereby anyone can, at any time, open and close the valves using hand force. This further saves the farmer money compared to if a dedicated service person would need to be engaged to close/open the valve and perform the service.

In some embodiments, the respective valves may be detachably mounted on the outside surface of the tank housing. Thereby, the serviceability is further improved, in that the valves may be removed and cleaned, mended or replaced if needed.

In some embodiments, the hollow main body of each connector has a maximum length of 20 cm or less, preferably 15 cm or less, more preferably 13 cm or less. As noted above, the compact design of the connector, i.e. the short length of the connector and hence the small inside volume of the connector, contributes to reducing the amount of un-cooled milk being left outside the milk storage tank. Hence it contributes to improving the milk quality and reducing bacteria growth by insuring correct "milk FIFO" and minimize the quantity of not cooled and not agitated milk. The short length and small inside volume of the connector contributes to these advantages both in that there is a physical constraint as to how much milk can be present inside the connector, and in that the connector can be cleaned more efficiently. Furthermore, less cleaning liquid is needed to obtain a satisfactory cleaning of the connector. Alternatively, if the same amount of cleaning liquid is used as for the common larger connectors, the inventive smaller connector with its compact design will be more effectively cleaned.

In one or more embodiments, the respective connection pipe of each connector is eccentrically located on the hollow main body of the connector in relation to a central axis of the hollow main body of the connector. In other words, the central axis of the hollow main body of the connector does not cross the central axis of the connection pipe.

Advantageously, by introducing cleaning liquid eccentrically into the connector, which is in fluid communication with the connection pipe, a vortex is created by the introduced liquid, which greatly improves the cleaning efficiency as the cleaning liquid reaches more parts of the connector and the associated valve and passes the areas to be cleaned at a higher speed.

The respective connection pipe of each connector may extend upwards from the hollow main body at an angle of at least 15 degrees and no more than 90 degrees between a central axis of the connection pipe and the vertical axis. Suitably, the respective connection pipe extends upwards so that gravity can aid in introducing the cleaning fluid into the connector. Advantageously, introduction of the cleaning liquid at an angle compared to the vertical axis, instead of straight down into the connector, further contributes to creating the vortex and thereby improving the cleaning efficiency and speed.

The hollow main body of each connector may further be narrower at the second end than at the first end. Thereby, the second end of the connector may be dedicated to receiving a milk conduit of a specific diameter. Advantageously, the narrowing shape further contributes to the reduced volume of the connector and the associated advantages described herein. The narrowing shape also contributes to creating the vortex when the cleaning liquid is introduced, thereby improving the cleaning efficiency and speed.

### DRAWINGS

The invention will now be described in more detail with reference to the appended drawings, wherein
Fig. 1 is a schematic overview of a milk storage tank according to an embodiment;
Fig. 2 is a schematic overview of a milk storage tank according to an embodiment;
Fig. 3 is a schematic overview of two milk inlet openings, in a milk storage tank according to an embodiment, connected to a respective milk conduit via a respective valve;
Fig. 4 is a schematic overview of two milk inlet openings, in a milk storage tank according to an embodiment, connected to a respective milk conduit via a respective valve and a respective connector;
Figs. 5a to 5c are schematic overviews of a connector to be connected to a milk inlet opening in a milk storage tank according to an embodiment; and
Fig. 6 shows two milk inlet openings with a respective valve and a respective connector, in a milk storage tank according to an embodiment, connected to cleaning system components.

All the figures are schematic, not necessarily to scale, and generally only show parts which are necessary to elucidate the respective embodiments, whereas other parts may be omitted or merely suggested. Any reference number appearing in multiple drawings refers to the same object or feature throughout the drawings, unless otherwise indicated.

### DETAILED DESCRIPTION

Aspects of the present disclosure will be described more fully hereinafter with reference to the accompanying drawings. The milk storage tanks disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. As used herein, the singular forms "a", "an" and "the" are intended to include the plural forms as well, unless the context clearly indicates otherwise.

The inventors have realised that there are several problems with existing solutions. Firstly, for milk bulk tanks, or milk storage tanks, wherein the same opening is used as milk inlet and outlet, the opening must be large, e.g. larger than 75 mm in diameter. The milk outlet is required to be larger than 76 mm, for example 100 mm, in diameter in order to allow fast emptying, which is a request from the dairies. This large diameter will give a problem with "milk FIFO" (first in first out) on voluntary milking system (VMS) farms, also referred to as automatic milking system farms, because it cannot be ensured that the new in-coming milk will push all the waiting milk in the pipe into the milk storage tank. Some of the milk may therefore remain in the pipe for quite a long time, as there is no turbulence. This in turn leads to issues with the milk quality.

The inventors have then realised that by separating the milk inlet from the outlet, the milk inlet can be made much smaller, which ensures improved "milk FIFO". In one non-limiting embodiment, the milk inlet is 1,5"/38 mm or 2"/50 mm, to conform to the standard sizes of VMS and conventional milking systems (CMS) milk conduits respectively. AMS or CMS milk conduits may also be referred to as AMS or CMS master lines and each milk conduit/master line may comprise milk received from one or more milking animals.

The inventors have further realised that it is important to minimize the connection area to the milk storage tank, e.g. the interface between an incoming milk line/milk conduit and the milk storage space of the milk storage tank, in order to be able to minimize the quantity of non-cooled and non-agitated milk, and thereby minimizing the risk of bacteria growth and enhancing milk quality.

Minimizing the connection area to the milk storage tank, e.g. the interface between an incoming milk line/milk conduit and the milk storage space of the milk storage tank, further solves the problem of enabling efficient cleaning all the components of this interface, thereby further contributing to minimizing the risk of bacteria growth and enhancing milk quality.

These and other problems are solved by embodiments presented herein, as further shown in the figures and described in the summary and the detailed description.

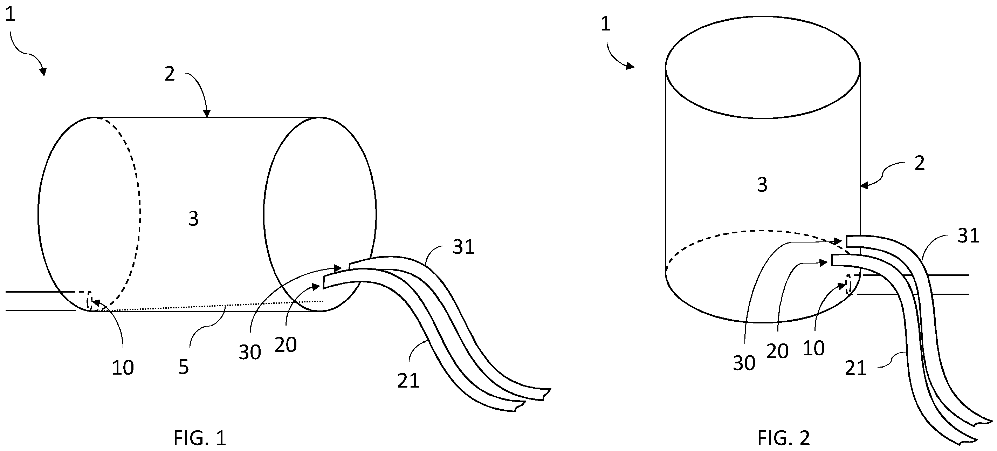

Embodiments of the invention will now be described with reference to Figs. 1 to 6.

**Figs. 1 and 2** show schematic overviews of a milk storage tank 1 arranged to store milk at an animal milking site, the milk storage tank 1 comprising a tank housing 2 provided with a milk storage space 3, a milk outlet opening 10 in the tank housing 2 enabling passing of milk out of the milk storage space 3 and at least two milk inlet openings 20, 30 in the tank housing 1, separate from the milk outlet opening 10, each milk inlet opening 20, 30 enabling passing of milk into the milk storage space 3, wherein each milk inlet opening 20, 30 is adapted to receive and be connected to a respective milk conduit 21, 31.

The use of two or more inlet openings contributes to improving the milk quality and reducing bacteria growth by minimizing the quantity of uncooled and not agitated milk present outside the milk storage space 3. It should be noted that although the figures show two milk inlet openings 20, 30, the number of milk inlet openings may be more.

The milk storage tank may be a horizontal tank, as illustrated in Fig. 1, or a vertical tank, as illustrated in Fig. 2, or have any other suitable tank design.

The milk outlet opening 10 is configured to empty the milk storage space 3. It is placed at or as close as possible to the bottom or lowest point of the inner bottom of the tank housing 2 to enable a complete removal of milk from, and thereby emptying of, the milk storage space 3. The milk outlet opening 10 is always located below the milk inlet openings 20, 30 as seen from the ground level to contribute to ensure correct milk discharge. It should be noted that the milk outlet opening 10 may be located on the same side of the tank housing 2 as one or more of the at least two milk inlet openings 20, 30, or a different side.

In one or more embodiments, as schematically illustrated by the dashed line 5 in Fig. 1, the inner bottom of the milk storage tank 1, i.e. the bottom of the milk storage space 3 (not shown in the figures), may slope toward the milk outlet opening 10 to ensure complete emptying of milk from the milk storage space 3. In these embodiments, the inner bottom will slope towards the milk outlet opening 10 irrespective of where the milk inlet openings 20, 30 are located. The slope need not be linear, as the exemplifying illustration of Fig. 1 shows, but any slope configuration that achieves the effect of complete emptying of milk from the milk storage space 3 by leading the milk towards the milk outlet opening 10 may be used. A complete emptying of the milk storage space 3 evidently contributes to ensuring the milk quality as well as improved efficiency in cleaning of the milk storage space 3.

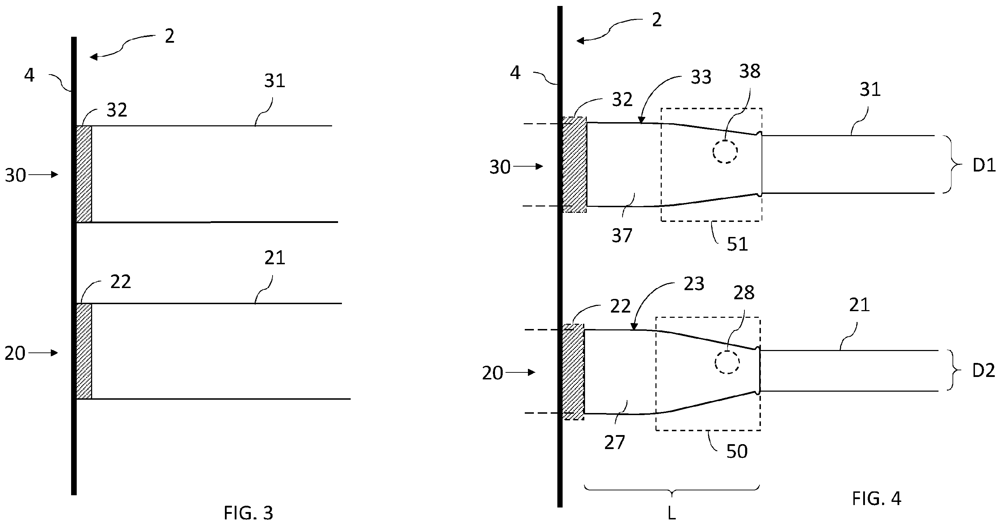

Each of the at least two milk inlet openings 20, 30 passes through a side wall, e.g. the wall 4 as illustrated in Figs. 3 and 4, of the tank housing 3 at a height of 50 cm or less from the inner bottom surface of the milk storage tank 1, i.e. from the bottom of the milk storage space 3. Preferably each of the at least two milk inlet openings 20, 30 passes through the side wall of the tank housing 3 at a height of 30 cm or less from the bottom of the milk storage space 3. More preferably the height is selected from the interval of 10 cm to 30 cm from the bottom of the milk storage space 3. Advantageously, this makes the milk inlets easily accessible to an operator. Suitable, the low placement on the side wall (including the front/back side wall in a horizontal tank) of the milk storage tank also reduces the maximum drop height of the first milk that enters the milk storage space 3 and thus reduces the risk of incoming milk falling into the milk storage tank from a large height, especially if the milk storage tank is empty or comprises a low level of milk. Thereby, the milk is handled gently and the risk of free fatty acids forming that deteriorate the quality and flavour of the milk is reduced. As the milk level rises inside the tank, the drop height is evidently reduced until it reaches the position of the inlets. Thereafter the milk level creates a pressure head that needs to be overcome by pumping pressure.

In one or more embodiment, one of the at least two milk inlet openings 20, 30 may be adapted to receive and be connected to a milk conduit having a first diameter D1 and another the at least two milk inlet openings 20, 30 is adapted to receive and be connected to a milk conduit having a second diameter D2, different from the first diameter D1. As illustrated in Fig. 4, it may be a second end 25, 35 of a hollow main body 27, 37 of a connector 23, 33 that is adapted to be connected to one of the at least two milk inlet openings 20, 30 may be adapted to receive and be connected to a milk conduit having a first diameter D1. Correspondingly, a second end 25, 35 of a hollow main body 27, 37 of a connector 23, 33 adapted to be connected to another of the at least two milk inlet openings 20, 30 may then be adapted to receive and be connected to a milk conduit having a second diameter D2, different from the first diameter D1. Thereby, the milk inlet openings 20, 30, possibly via the respective connectors 23, 33, may e.g. be connected to both a AMS master line/master conduit (possibly comprising milk from a number of AMS lines/conduits) and a CMS line/conduit. The milk inlets may comprise standardized connections with threads for connection to several AMS and/or CMS milking systems. The connectors are further described in connection with Figs. 4 to 6.

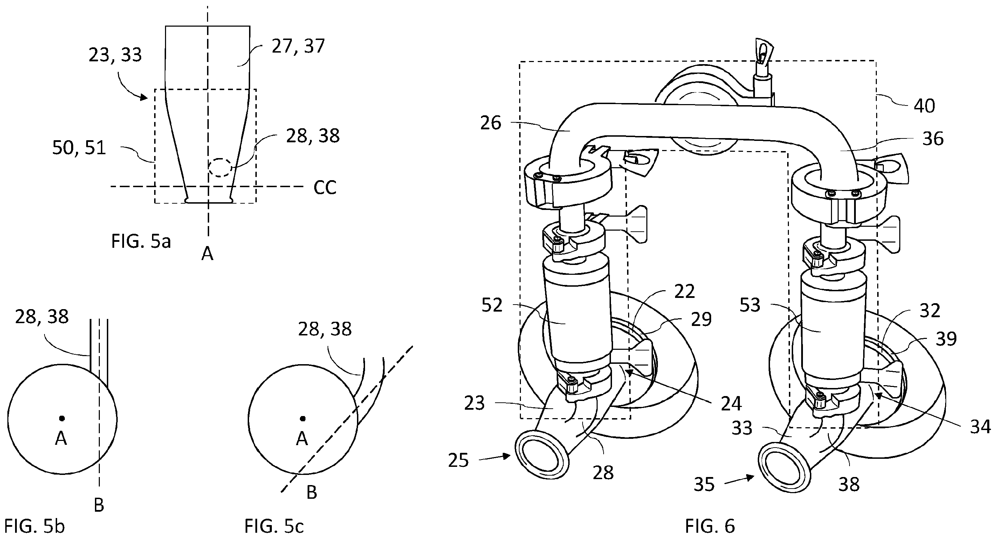

For each of the at least two milk inlet openings 20, 30 the milk storage tank 1 further comprises a respective valve 22, 32 configured to close or open the respective milk opening 20, 30, as illustrated in **Fig. 3** and further in **Figs. 4** **and** **6****.**

In some embodiments, one or more of the valves 22, 32 may be mounted on the outside surface of the tank housing 2, or attached using a clamp connection or other suitable connection, at the respective milk inlet opening 20, 30. A non-limiting example of such a clamp connection 29, 39 is illustrated in Fig. 6. In some embodiments, one or more of the valves 22, 32 may be located at another suitable location on the respective milk inlet conduit 21, 31 or, if included, on a respective connector 33, 23 further described in connection with Fig. 4, 5 and 6. In all embodiments, the valves 22, 32 are located close to the tank housing 2, to further ensure that the amount of milk that may be left between the tank housing 2 and the respective valve 22, 32 when the valve is closed is minimized.

In some embodiments, the respective valves 22, 32 may be detachably mounted on the outside surface, e.g. the wall 4, of the tank housing 2. Thereby, the serviceability is further improved, in that the valves may be removed and cleaned, fixed or replaced if needed. As non-limiting examples, the valves may be screwed or bolted to the milk storage tank. In some embodiments, each valve 22, 32 is attached to the outside of the milk storage tank 1 via a clamp connection or other suitable connection instead being mounted directly on the surface of the tank housing 2.

In one or more embodiments, the respective valves 22, 32 may be configured to be manually operated. Thereby, service can always be granted. Furthermore, in the event of a malfunction, the valve can be closed while retaining the volume of milk present in the bulk tank. Suitably, the manually operated valve can be closed by a farmer or other operator who does not need to be a milk tank expert or use special tools, and this person can e.g. replace a broken component or hand wash components that are located outside the milk storage tank if needed without having to wait for the next milk pickup and emptying of the milk storage tank.

The valves 22, 32 may be pneumatic or electric valves. The valves 22, 32 may further be any suitable type of valve, e.g. but not limited to a selection of butterfly valves, ball valves, one-way valves, control valves, diaphragm valves, gate valves and globe valves.

**Fig. 3** is a schematic overview of two milk inlet openings 20, 30, in a side wall 4 of a milk storage tank 1. The two milk inlet openings 20, 30 are connected to a respective milk conduit 21, 31 via a respective valve 22, 32.

Embodiments wherein the milk inlet openings 20, 30 are connected to a respective milk conduit 21, 31 via a respective valve 22, 32 and a respective connector 23, 33 will now be described in connection with Figs. 4, 5 and 6.

A connector, which may also be referred to as a connection, or connecting pipe, is adapted to receive and connect to at least a milk inlet, a milk conduit and a cleaning conduit branch. The connector is a three-part connector adapted to a milk inlet, a milk conduit and a cleaning conduit branch. The three-part connector may in these embodiments for example be a t-piece or a y-piece, but any other suitable type of connection, also including more than three connection points, may be used.

**Fig. 4** is a schematic overview of two milk inlet openings 20, 30, in a side wall 4 of a milk storage tank 1. In accordance with embodiments illustrated in Fig. 4, the two milk inlet openings 20, 30 are connected to a respective milk conduit 21, 31 via a respective valve 22, 32 and a respective connector 23, 33.

**Fig. 5a to 5c** are schematic overviews of a connector 23, 33 to be connected to a milk inlet opening 20, 30.

**Fig. 6** shows an illustrative example design of two milk inlet openings 20, 30 with a respective valve 22, 32 and a respective connector 23, 33, in a milk storage tank 1. Fig. 6 further shows the two milk inlet openings 20, 30 with a respective valve 22, 32 and a respective connector 23, 33 connected to cleaning system components.

The milk storage tank 1 further comprises, for each of the at least two milk inlet openings 20, 30, a respective connector 23, 33 comprising a hollow main body 27, 37 and a connection pipe 28, 38. The respective connector 23, 33 is adapted to be connected to the respective milk inlet opening 20, 30 at a respective first end 24, 34 of the hollow main body 27, 37, and the respective milk inlet opening 20, 30 is in turn adapted to receive and be connected to the respective milk conduit 21, 31 via the respective connector 23, 33. The respective connector 23, 33 is further adapted to be connected to the respective milk conduit 21, 31 at a respective second end 25, 35 of the hollow main body 27, 37. Finally, the respective connector 23, 33 is adapted to be connected to a respective cleaning conduit branch 26, 36 in fluid communication with the respective connection pipe 28, 38, the respective cleaning conduit branch 26, 36 being adapted to enable passing of cleaning liquid into the respective connector 23, 33 from a cleaning system 40, indicated by the dashed line in Fig. 6. Each cleaning conduit branch 26, 26 is in turn adapted to enable passing of cleaning liquid from the cleaning system 40 into the respective valve 22, 32 via the respective connector 23, 33. Cleaning liquid may in this context e.g. comprise any or all of cold water, hot water and cleaning agent. The cleaning system 40 comprises components located outside the outer wall of the milk storage tank 1 and components located between an inner part of the wall (the inner wall not shown in the figures) and an outer part of the wall (components located between the inner part of the wall and the outer part of the wall not shown in the figures). The cleaning system 40 comprises valves, e.g. cylindrical pneumatic valves 52, 53 shown in Fig. 6, which are normally closed and opens automatically when the tank starts to clean, by a cleaning program provided by a tank cleaning unit.

Suitably, the connector 23, 33 thereby enables cleaning of the components that connect a milk conduit 21, 31 and a milk inlet opening 20, 30, i.e. the respective valve 22, 32 and the connector 23, 33 itself. By the connector 23, 33 being a dedicated connector connecting to a single milk conduit, compared to prior art solutions having connectors that connect more than one milk conduit to a milk inlet opening, the present connector can be made shorter and more compact.

In one or more embodiments, the hollow main body 27, 37 of each connector 23, 33 has a maximum length L of 20 cm or less, preferably 15 cm or less, more preferably 13 cm or less. The short length of the connector, and hence the small inside volume of the connector, contributes to reducing the amount of un-cooled milk being left outside the milk storage tank. Hence it contributes to improving the milk quality and reducing bacteria growth by minimizing the quantity of non-cooled and non-agitated milk. The short length and small inside volume of the connector contributes to these advantages both in that there is a physical constraint as to how much milk can be present inside the connector, and in that the connector can be cleaned more efficiently. Furthermore, less cleaning liquid is needed to obtain a satisfactory cleaning of the connector. Alternatively, if the same amount of cleaning liquid is used as for the common larger connectors, the inventive smaller connector with its compact design will be more effectively cleaned.

The respective connection pipe 28, 38 of each connector 23, 33 is eccentrically located on the hollow main body 27, 37 of the connector 23, 33 in relation to a central axis A of the hollow main body 27, 37 of the connector 23, 33. In other words, the central axis A of the hollow main body 27, 37 of the connector 23, 33 does not cross a central axis B of the connection pipe 28, 38. This is further illustrated in **Figs. 5a to 5c****,** wherein Fig. 5a shows a side view of a connector 27, 37 with the central axis A of the hollow main body 27, 37 of the connector 23, 33 indicated. Figs. 5b and 5c in turn each show a simplified cross sectional view of the connector 27, 37 at the cross section, i.e. when looking along the central axis A of the hollow main body 27, 37 of the connector 23, 33. In Figs. 5b and 5c the central axis B of the connection pipe 28, 38 is further indicated.

In one embodiment, the connection pipe 28, 38 may extend linearly from the hollow main body 27, 37 of the connector 23, 33, as illustrated in Fig. 5b, or in another embodiment it may extend non-linearly, for example having a curved shape, from the hollow main body 27, 37 of the connector 23, 33, as illustrated in Fig. 5c. The central axis B of the connection pipe 28, 38 is in this context defined as the central axis of a connection pipe 28, 38 extending linearly outwards from the entry point into the hollow main body 27, 37 of the connector 23, 33.

By introducing the cleaning liquid eccentrically into the connector, a vortex is created by the introduced liquid, which greatly improves the cleaning efficiency as the cleaning liquid reaches more parts of the connector and passes the areas to be cleaned at a higher speed compared to if the connector had been flushed by liquid passing it from one end to the other. In Figs. 4, 5 and 6 the respective connection pipe 28, 38 of each connector 23, 33 is shown as being located closer to the second end 25, 35 than to the first end 24, 34 of the connector 23, 33. Of course, the opposite arrangement, i.e. having the respective connection pipe 28, 38 of each connector 23, 33 located closer to the first end 24, 34 would also contribute to generating a vortex in the introduced cleaning liquid. However, for practical accessibility reasons, when different components need to be reached by the hands of a farmer, operator or other, it is typically preferable to keep the cleaning system components and components connected thereto further out from the wall of the milk storage tank 1.

In some embodiments, the respective connection pipe 28, 38 of each connector 23, 33 extends upwards from the hollow main body at an angle differing from the vertical axis. The angle may be selected such that there is at least 15 degrees and no more than 90 degrees between a central axis of the connection pipe and the vertical axis. Suitably, the respective connection pipe extends upwards so that gravity can aid in introducing the cleaning fluid into the connector. Advantageously, introduction of the cleaning liquid at an angle compared to the vertical axis, instead of straight down into the connector, further contributes to creating the vortex and thereby improving the cleaning efficiency and speed. Advantageously, introduction of the cleaning liquid at an angle compared to the vertical axis, instead of straight down into the connector, further contributes to creating the vortex and thereby improving the cleaning efficiency and speed. As can be seen from Fig. 6, in some embodiments the respective connection pipe 28, 38 may further be bent so that cleaning liquid enters the respective connection pipe 28, 38 from the cleaning system 40 from above in a direction substantially coinciding with the vertical axis, and then exits the respective connection pipe 28, 38, and enters the hollow main body 27, 37 of the respective connector 23, 33, at an angle that differs from the vertical axis. It is noted that the term substantially coinciding with the vertical axis in this context means that they coincide within small tolerances of one or possibly a few degrees, and that an angle differing from the vertical axis in this context means an angle differing more than said small tolerances from the vertical axis.

The compact design of the connector according to the embodiments described above is further enabled by the milk inlet openings being separate from the milk outlet opening, because the diameter of each milk inlet opening is significantly smaller than that of the milk outlet. This further contributes to achieving a smaller volume between the milk conduit and the milk inlet opening where remaining milk may be left uncooled and the advantages that the risk of bacteria growth is thereby reduced and milk quality further ensured.

The hollow main body 27, 37 of each connector 23, 33 may further be narrower at the second end 25, 35 than at the first end 24, 34, as exemplified in the dashed area 50, 51 of Figs. 4 and 5. Thereby, the second end of the connector may be dedicated to receive a milk conduit of a specific diameter. Advantageously, the narrowing shape further contributes to the reduced volume of the connector and the associated advantages described herein. The narrowing shape also contributes to creating the vortex when the cleaning liquid is introduced, thereby improving the cleaning efficiency and speed.

Additionally, variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable. The scope of the invention is defined by the appended claims.

## Claims

1. A milk storage tank (1) arranged to store milk at an animal milking site, the milk storage tank (1) comprising:
- a tank housing (2) provided with a milk storage space (3);
- a milk outlet opening (10) in the tank housing (2) enabling passing of milk out of the milk storage space (3);
- at least two milk inlet openings (20, 30) in the tank housing (1), separate from the milk outlet opening (10), each milk inlet opening (20, 30) enabling passing of milk into the milk storage space (3), wherein each milk inlet opening (20, 30) is adapted to receive and be connected to a respective milk conduit (21, 31); and
for each of the at least two milk inlet openings (20, 30):
- a respective valve (22, 32) configured to close or open the respective milk opening (20, 30), **characterized in that** the milk storage tank (1) comprises for each of the at least two milk inlet opening (20, 30)
- a respective connector (23, 33) comprising a hollow main body (27, 37) and a connection pipe (28, 38), the respective connector (23, 33) being adapted to be connected to:
- the respective milk inlet opening (20, 30) at a respective first end (24, 34) of the hollow main body (27, 37);
- the respective milk conduit (21, 31) at a respective second end (25, 35) of the hollow main body (27, 37), and
- a respective cleaning conduit branch (26, 36) in fluid communication with the respective connection pipe (28, 38), the respective cleaning conduit branch (26, 36) being adapted to enable passing of cleaning liquid into the respective connector (23, 33) from a cleaning system (40).

2. The milk storage tank (1) of claim 1, wherein the hollow main body (27, 37) of each connector (23, 33) has a maximum length (L) of 20 cm or less, preferably 15 cm or less, more preferably 13 cm or less.

3. The milk storage tank (1) of any of the preceding claims, wherein the respective connection pipe (28, 38) of each connector (23, 33) is eccentrically located on the hollow main body (27, 37) of the connector in relation to a central axis (A) of the hollow main body (27, 37) of the connector (23, 33).

4. The milk storage tank (1) of claim 3, wherein the respective connection pipe (28, 38) of each connector (23, 33) extends upwards from the hollow main body (27, 37) of the connector (23, 33) with an angle of at least 15 degrees and no more than 90 degrees between a central axis (B) of the connection pipe (28, 38) and the vertical axis.

5. The milk storage tank (1) of any of the preceding claims, wherein the hollow main body (27, 37) of each connector (23, 33) is narrower at the second end (25, 35) than at the first end (24, 34).

6. The milk storage tank (1) of any of the preceding claims, wherein each of the at least two milk inlet openings (20, 30) pass through a side wall of the tank housing (1) at a height of 50 cm or less from the bottom of the milk storage space (3), preferably 30 cm or less from the bottom of the milk storage space (3), most preferably between 10 cm and 30 cm from the bottom of the milk storage space (3).

7. The milk storage tank (1) of any of the preceding claims, wherein the respective valves (22, 32) are configured to be manually operated.

8. The milk storage tank (1) of any of the preceding claims, wherein one of the at least two milk inlet openings (20, 30) is adapted to receive and be connected to a milk conduit having a first diameter (D1) and another of the at least two milk inlet openings (20, 30) is adapted to receive and be connected to a milk conduit having a second diameter (D2), different from the first diameter (D1).

9. The milk storage tank (1) of any of the preceding claims, wherein the respective valves (22, 32) are detachably mounted on the outside surface of the tank housing (2).

## Patentansprüche

1. Milchlagertank (1), der angeordnet ist, um Milch an einem Tiermelkplatz zu lagern, der Milchlagertank (1) umfassend:
- ein Tankgehäuse (2), das mit einem Milchlagerraum (3) ausgestattet ist;
- eine Milchauslassöffnung (10) in dem Tankgehäuse (2), die ein Austreten von Milch aus dem Milchlagerraum (3) ermöglicht;
- mindestens zwei Milcheinlassöffnungen (20, 30) in dem Tankgehäuse (1), getrennt von der Milchauslassöffnung (10), wobei jede Milcheinlassöffnung (20, 30) ein Einleiten von Milch in den Milchlagerraum (3) ermöglicht, wobei jede Milcheinlassöffnung (20, 30) angepasst ist, um eine jeweilige Milchleitung (21, 31) aufzunehmen und mit dieser verbunden zu werden; und
für jede der mindestens zwei Milcheinlassöffnungen (20, 30):
- ein jeweiliges Ventil (22, 32), das konfiguriert ist, um die jeweilige Milchöffnung (20, 30) zu schließen oder zu öffnen,
**dadurch gekennzeichnet, dass** der Milchlagertank (1) für jede der mindestens zwei Milcheinlassöffnungen (20, 30) einen jeweiligen Verbinder (23, 33), umfassend einen hohlen Hauptkörper (27, 37) und ein Verbindungsrohr (28, 38), umfasst, wobei der jeweilige Verbinder (23, 33) angepasst ist, um verbunden zu werden mit:
- der jeweiligen Milcheinlassöffnung (20, 30) an einem jeweiligen ersten Ende (24, 34) des hohlen Hauptkörpers (27, 37);
- der jeweiligen Milchleitung (21, 31) an einem jeweiligen zweiten Ende (25, 35) des hohlen Hauptkörpers (27, 37), und
- einem jeweiligen Reinigungsleitungszweig (26, 36) in Fluidkommunikation mit dem jeweiligen Verbindungsrohr (28, 38), wobei der jeweilige Reinigungsleitungszweig (26, 36) angepasst ist, um das Einleiten von Reinigungsflüssigkeit von einem Reinigungssystem (40) in den jeweiligen Verbinder (23, 33) zu ermöglichen.

2. Milchlagertank (1) nach Anspruch 1, wobei der hohle Hauptkörper (27, 37) jedes Verbinders (23, 33) eine maximale Länge (L) von 20 cm oder weniger, vorzugsweise 15 cm oder weniger, mehr bevorzugt 13 cm oder weniger, aufweist.

3. Milchlagertank (1) nach einem der vorstehenden Ansprüche, wobei das jeweilige Verbindungsrohr (28, 38) jedes Verbinders (23, 33) in Bezug auf eine Mittelachse (A) des hohlen Hauptkörpers (27, 37) des Verbinders (23, 33) auf dem hohlen Hauptkörper (27, 37) des Verbinders exzentrisch angeordnet ist.

4. Milchlagertank (1) nach Anspruch 3, wobei sich das jeweilige Verbindungsrohr (28, 38) jedes Verbinders (23, 33) von dem hohlen Hauptkörper (27, 37) des Verbinders (23, 33) mit einem Winkel von mindestens 15 Grad und nicht mehr als 90 Grad zwischen einer Mittelachse (B) des Verbindungsrohrs (28, 38) und der vertikalen Achse nach oben erstreckt.

5. Milchlagertank (1) nach einem der vorstehenden Ansprüche, wobei der hohle Hauptkörper (27, 37) jedes Verbinders (23, 33) an dem zweiten Ende (25, 35) schmaler als an dem ersten Ende (24, 34) ist.

6. Milchlagertank (1) nach einem der vorstehenden Ansprüche, wobei jede der mindestens zwei Milcheinlassöffnungen (20, 30) eine Seitenwand des Tankgehäuses (1) in einer Höhe von 50 cm oder weniger von dem Boden des Milchlagerraums (3), vorzugsweise 30 cm oder weniger von dem Boden des Milchlagerraums (3), am meisten bevorzugt zwischen 10 cm und 30 cm von dem Boden des Milchlagerraums (3), durchläuft.

7. Milchlagertank (1) nach einem der vorstehenden Ansprüche, wobei die jeweiligen Ventile (22, 32) konfiguriert sind, um manuell betätigt zu werden.

8. Milchlagertank (1) nach einem der vorstehenden Ansprüche, wobei eine der mindestens zwei Milcheinlassöffnungen (20, 30) angepasst ist, um eine Milchleitung, die einen ersten Durchmesser (D1) aufweist, aufzunehmen und mit dieser verbunden zu werden, und eine andere der mindestens zwei Milcheinlassöffnungen (20, 30) angepasst ist, um eine Milchleitung aufzunehmen und mit dieser verbunden zu werden, die einen zweiten Durchmesser (D2), der sich von dem ersten Durchmesser (D1) unterscheidet, aufweist.

9. Milchlagertank (1) nach einem der vorstehenden Ansprüche, wobei die jeweiligen Ventile (22, 32) an der Außenoberfläche des Tankgehäuses (2) abnehmbar montiert sind.

## Revendications

1. Réservoir de stockage de lait (1) agencé pour stocker du lait sur un site de traite d'animaux, le réservoir de stockage de lait (1) comprenant :
- un boîtier de réservoir (2) pourvu d'un espace de stockage de lait (3) ;
- une ouverture de sortie de lait (10) dans le boîtier de réservoir (2) permettant le passage du lait hors de l'espace de stockage de lait (3) ;
- au moins deux ouvertures d'entrée de lait (20, 30) dans le boîtier de réservoir (1), séparées de l'ouverture de sortie de lait (10), chaque ouverture d'entrée de lait (20, 30) permettant le passage du lait dans l'espace de stockage de lait (3), dans lequel chaque ouverture d'entrée de lait (20, 30) est adaptée pour recevoir et être reliée à un conduit de lait respectif (21, 31) ; et
pour chacune des au moins deux ouvertures d'entrée de lait (20, 30) :
- une vanne respective (22, 32) conçue pour fermer ou ouvrir l'ouverture de lait respective (20, 30),
**caractérisé en ce que** le réservoir de stockage de lait (1) comprend pour chacune des au moins deux ouvertures d'entrée de lait (20, 30)
un raccord respectif (23, 33) comprenant un corps principal creux (27, 37) et un tuyau de raccordement (28, 38), le raccord respectif (23, 33) étant adapté pour être relié à :
- l'ouverture d'entrée de lait (20, 30) respective au niveau d'une première extrémité (24, 34) respective du corps principal creux (27, 37) ;
- le conduit de lait (21, 31) respectif au niveau d'une seconde extrémité (25, 35) respective du corps principal creux (27, 37), et
- une branche de conduit de nettoyage (26, 36) respective en communication fluidique avec le tuyau de raccordement (28, 38) respectif, la branche de conduit de nettoyage (26, 36) respective étant adaptée pour permettre le passage d'un liquide de nettoyage dans le raccord (23, 33) respectif à partir d'un système de nettoyage (40).

2. Réservoir de stockage de lait (1) selon la revendication 1, dans lequel le corps principal creux (27, 37) de chaque raccord (23, 33) a une longueur maximale (L) de 20 cm ou moins, de préférence 15 cm ou moins, plus préférablement 13 cm ou moins.

3. Réservoir de stockage de lait (1) selon l'une quelconque des revendications précédentes, dans lequel le tuyau de raccordement (28, 38) respectif de chaque raccord (23, 33) est situé de manière excentrique sur le corps principal creux (27, 37) du raccord par rapport à un axe central (A) du corps principal creux (27, 37) du raccord (23, 33).

4. Réservoir de stockage de lait (1) selon la revendication 3, dans lequel le tuyau de raccordement (28, 38) respectif de chaque raccord (23, 33) s'étend vers le haut à partir du corps principal creux (27, 37) du raccord (23, 33) avec un angle d'au moins 15 degrés et pas plus de 90 degrés entre un axe central (B) du tuyau de raccordement (28, 38) et l'axe vertical.

5. Réservoir de stockage de lait (1) selon l'une quelconque des revendications précédentes, dans lequel le corps principal creux (27, 37) de chaque raccord (23, 33) est plus étroit au niveau de la seconde extrémité (25, 35) qu'au niveau de la première (24, 34).

6. Réservoir de stockage de lait (1) selon l'une quelconque des revendications précédentes, dans lequel chacune des au moins deux ouvertures d'entrée de lait (20, 30) traverse une paroi latérale du boîtier de réservoir (1) à une hauteur de 50 cm ou moins depuis le fond de l'espace de stockage de lait (3), de préférence de 30 cm ou moins depuis le fond de l'espace de stockage de lait (3), plus préférablement entre 10 cm et 30 cm depuis le fond de l'espace de stockage de lait (3).

7. Réservoir de stockage de lait (1) selon l'une quelconque des revendications précédentes, dans lequel les vannes respectives (22, 32) sont conçues pour être actionnées manuellement.

8. Réservoir de stockage de lait (1) selon l'une quelconque des revendications précédentes, dans lequel l'une des au moins deux ouvertures d'entrée de lait (20, 30) est adaptée pour recevoir et être reliée à un conduit de lait ayant un premier diamètre (D1) et une autre des au moins deux ouvertures d'entrée de lait (20, 30) est adaptée pour recevoir et être reliée à un conduit de lait ayant un second diamètre (D2), différent du premier diamètre (D1).

9. Réservoir de stockage de lait (1) selon l'une quelconque des revendications précédentes, dans lequel les vannes respectives (22, 32) sont montées de manière amovible sur la surface extérieure du boîtier de réservoir (2).
